# EUROPEAN PATENT APPLICATION

(11) **EP 4 464 994 A1**
(43) Date of publication of application: **20.11.2024**
(21) Application number: 24176344.0
(22) Date of filing: 16.05.2024
(51) Int. Cl.: G01F 23/292

(54) **SYSTEMS AND METHODS FOR SENSING LEVEL OF LIQUID WITHIN A CONTAINER**

(30) Priority: 16.05.2023 US 202363502449 P; 03.10.2023 US 202318479935; 29.11.2023 US 202363603691 P; 04.01.2024 US 202418403872
(71) Applicant: The Boeing Company, Arlington, VA 22202 (US); Advanced Fibreoptic Engineering Ltd, Arlington, VA 22202 (US)
(72) Inventor: JOHNSON, Mark Robert, Arlington, 22202 (US); ZANOLA, Marco, Arlington, 22202 (US); WHEELER, Timothy James, Arlington, 22202 (US); WRIGHT, Elaine Cheng, Arlington, 22202 (US)
(74) Representative: Morrall, Jonathan Ian McLachlan

(57) **Abstract**

A system and a method include a container configured to retain one or more liquids. A liquid level sensor is disposed within the container. The liquid level sensor is configured to transmit and receive light including a first light component and a second light component into the container retaining the one or more liquid. A control unit is in communication with the liquid level sensor. The control unit is configured to determine a level of the one or more liquids within the container based on a comparison of the first light component in relation to the second light component.

## Description

### CROSS-REFERENCE TO RELATED APPLICATIONS

This application relates to and claims priority benefits from U.S. Provisional Patent Application No. 63/502,449, filed May 16, 2023, which is hereby incorporated by reference in its entirety.

This application also relates to and claims priority benefits from U.S. Provisional Patent Application No. 63/603,691, filed November 29, 2023, which is hereby incorporated by reference in its entirety.

### FIELD OF THE DISCLOSURE

Examples of the present disclosure generally relate to systems and methods for sensing a level of a liquid within a container, such as liquid fuel within a fuel tank.

### BACKGROUND OF THE DISCLOSURE

Various containers can be used to retain a liquid. For example, a reservoir can retain water. A fuel tank of a vehicle retains fuel.

In many industrial, commercial, and military applications, there is a need to determine the presence, and in particular the level, of a liquid inside a container. In some cases, the liquid(s) may be hazardous, such as volatile and/or combustible hydrocarbons. As an example, various vehicles, such as aircraft, cars, trucks, and the like include fuel tanks that retain fuel. As another example, oil refineries, fuel stations, airports, chemical treatment plants, and the like may include various tanks for storing fuel, other liquids, chemicals, or the like.

A known method for sensing a liquid level within a container includes using one or more electrical devices, such as capacitors, resistors, or ultrasonic transducers. However, such sensing devices introduce a potential source of ignition inside the container and may therefore be undesirable, and/or require careful design, management, and maintenance to ensure safe use.

### SUMMARY OF THE DISCLOSURE

A need exists for a system and a method for effectively, efficiently, and safely sensing a level of liquid within a container, such as a fuel tank of a vehicle.

With that need in mind, certain examples of the present disclosure provide a system including a container configured to retain one or more liquids. A liquid level sensor is disposed within the container. The liquid level sensor is configured to transmit and receive light including a first light component and a second light component into the container retaining the one or more liquid. A control unit is in communication with the liquid level sensor. The control unit is configured to determine a level of the one or more liquids within the container based on a comparison of the first light component in relation to the second light component.

In at least one example, the liquid level sensor includes a first optical fiber. The first light component and the second light component are configured to be transmitted into the first optical fiber, and pass through the first optical fiber into an internal chamber of the container. The liquid level sensor also includes a second optical fiber. The first light component and the second light component within the internal chamber are configured to be received by the second optical fiber. The first optical fiber can be parallel to the second optical fiber. The first optical fiber and the second optical fiber can extend along a height of the container.

In at least one example, the first light component includes red light, and the second light component includes blue light.

In at least one example, the control unit is configured to compare the first light component in relation to the second light component by comparing a first peak of a first wavelength of the first light component in relation to second peak of a second wavelength of the second light component. As a further example, the control unit is configured to determine the level of the one or more liquids based on a ratio of the first peak to the second peak, or vice versa.

In at least one example, the liquid level sensor includes a light emitter configured to emit the first light component and the second component, and a light detector configured to receive the first light component and the second light component.

In at least one example, the container is a fuel tank of a vehicle, and the liquid is liquid fuel.

Certain examples of the present disclosure provide a method including retaining one or more liquids within a container; disposing a liquid level sensor within the container; transmitting and receiving, by the liquid level sensor, light including a first light component and a second light component into the container retaining the one or more liquid; comparing, by a control unit in communication with the liquid level sensor, the first light component in relation to the second light component; and determining, by the control unit in communication, a level of the one or more liquids within the container based on said comparing.

### BRIEF DESCRIPTION OF THE DRAWINGS

Figure 1 illustrates a schematic diagram of a system for sensing a level of a liquid within a container, according to an example of the present disclosure.
Figure 2 illustrates a liquid level sensor within a container retaining liquid at a relatively high level, according to an example of the present disclosure.
Figure 3 illustrates a graph of wavelength to signal level for the liquid at the relatively high level.
Figure 4 illustrates the liquid level sensor within the container retaining the liquid at a relatively low level, according to an example of the present disclosure.
Figure 5 illustrates a graph of wavelength to signal level for the liquid at the relatively low level.
Figure 6 illustrates a liquid level sensor within a container retaining liquid, according to an example of the present disclosure.
Figure 7 illustrates a flow chart of a method for sensing a level of a liquid within a container, according to an example of the present disclosure.
Figure 8 illustrates a perspective front view of an aircraft, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

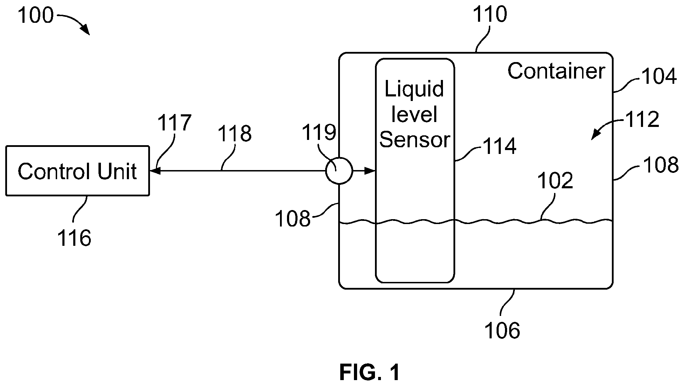

Figure 1 illustrates a schematic diagram of a system 100 for sensing a level of a liquid 102 within a container 104, according to an example of the present disclosure. The container 104 is a vessel, tank, reservoir, or the like that is configured to retain the liquid 102. The container 104 can be closed. Optionally, the container 104 can have an open top end, for example. In at least one example, the container 104 is a reservoir configured to retain the liquid 102, such as water. As another example, the container 104 is a fuel tank, such as of a vehicle, and the liquid 102 is a fuel for the vehicle. As another example, the container 104 is a tank configured to retain various other liquids, chemicals, and/or the like.

The container 104 includes a base 106, and one or more walls 108 upwardly extending from the base 106. In at least one example, a top wall 110 connects to the wall(s) 108 opposite from the base 106. The top wall 110 may not include any openings. Optionally, one or more openings may be formed in the top wall 110. As another example, the container 104 may not include the top wall 110.

An internal chamber 112 is defined between the base 106, the wall(s) 108, and the top wall 110. The liquid 102 is retained within the internal chamber 112.

A liquid level sensor 114 is disposed (for example, mounted, installed, attached, placed, and/or the like) within the internal chamber 112 of the container 104. As described herein, the liquid level sensor 114 is configured to sense or otherwise detect the level of the liquid 102 within the container 104. In at least one example, the liquid level sensor 114 is in communication with a control unit 116, such as through a wired or wireless connection. For example, an optical line 118 can extend through a portion of the wall(s) 108 and communicatively couple the liquid level sensor 114 to the control unit 116.

As used herein, the term "control unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the control unit 116 may be or include one or more processors that are configured to control operation, as described herein.

The control unit 116 is configured to execute a set of instructions that are stored in one or more data storage units or elements (such as one or more memories), in order to process data. For example, the control unit 116 may include or be coupled to one or more memories. The data storage units may also store data or other information as desired or needed. The data storage units may be in the form of an information source or a physical memory element within a processing machine.

The set of instructions may include various commands that instruct the control unit 116 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the control unit 116. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control unit 116 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include aspects of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

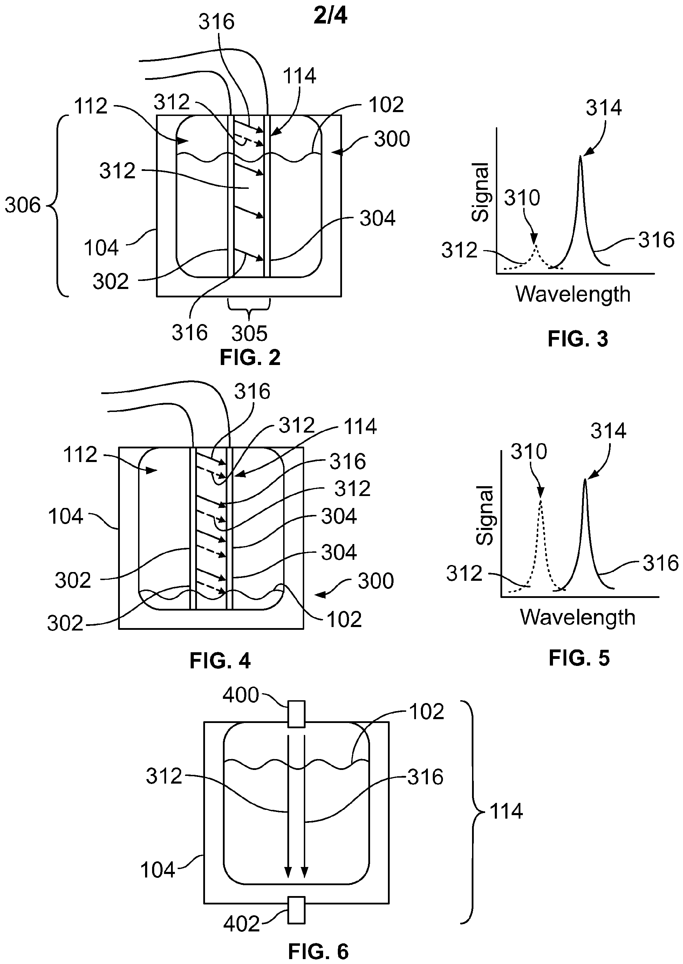

Figure 2 illustrates a liquid level sensor 114 within a container 104 retaining liquid 102 at a relatively high level 300, according to an example of the present disclosure. Referring to Figures 1 and 2, in at least one example, the liquid level sensor 114 is an optical probe that includes a first optical fiber 302 and a second optical fiber 304.

The first optical fiber 302 and the second optical fiber 304 can be parallel to one another. In at least one example, the first optical fiber 302 and the second optical fiber 304 include a scattering medium, which allows light to pass through the first optical fiber 302 and the second optical fiber 304 and into the liquid 102, such as liquid jet fuel. The first optical fiber 302 can be separated from the second optical fiber 304 by a separation distance 305, which can be 6 inches or less. Optionally, the separation distance 305 can be greater than 6 inches, such as 12 inches, 24 inches, or more.

The first optical fiber 302 and the second optical fiber 304 can be secured to a support structure, such as an aluminum support beam or bracket. The first optical fiber 302 and the second optical fiber 304 extend along a height 306 of the container 104. For example, the first optical fiber 302 and the second optical fiber 304 are vertically oriented, and extend along an entire height of the internal chamber 112. Optionally, the first optical fiber 302 and the second optical fiber 304 extend along less than entire height of the internal chamber 112.

In at least one example, the first optical fiber 302 is a light transmission fiber, through which light from the light source 117 is transmitted into the internal chamber 112 of the container, and the second optical fiber 304 is a light reception fiber, into which light transmitted into the internal chamber 112 is received. In at least one example, the control unit 116 operates the light source 117 to transmit light having a first light component 312 and a second light component 316 into the first optical fiber 302. In at least one example, the first light component 312 includes red light, and the second light component 316 includes blue light, or vice versa. In at least one example, the control unit 116 operates the light source 117 to transmit light, such as visible white light, having both the first light component 312 and the second light component 316. As another example, the control unit 116 operates the light source 117 to transmit the first light component 312, such as red light, separately from the second light component 316, such as blue light.

In operation, the control unit 116 operates the light source 117 to transmit the first light component 312, such as red light, and the second light component 316, such as blue light, into the first optical fiber 302, which is the light transmission fiber. The first light component 312 and the second light component 316 are selected such that a wavelength of the first light component 312, such as red light, is absorbed by a particular liquid 102 (such as liquid j et fuel), while a wavelength of the second light component 316, such as blue light, is not absorbed the liquid 102 (or vice versa). For example, the liquid 102 (such as liquid jet fuel) absorbs the red light, but does not absorb the blue light. The light including the first light component 312 and the second light component 316 passes into the first optical fiber 302, and then through and out of the first optical fiber 302 into the internal chamber 112. The light within the internal chamber 112 is then received by the second optical fiber 304, which is in communication with the control unit 116.

In order to determine a level of the liquid 102 within the container 104, the control unit 116 receives the light from the second optical fiber 304, which is the light reception fiber. The control unit 116 determines the level of the liquid 102 within the container 104 based on a ratio of a peak (for example, amplitude) of a wavelength of the first light component 312 to a peak (for example, amplitude) of a wavelength of the second light component 316 (or a ratio of the peak of the wavelength of the second light component 316 to the peak of the wavelength of the first light component 316). In particular, an increased amount of liquid 102 within the container 104 absorbs an increased amount of the first light component 312, such as red light, while the second light component 316, such as blue light, is not absorbed. Accordingly, the peak of a wavelength of the first light component 312 decreases as the level 300 increases. Conversely, the peak of the wavelength of the first light component 312 increases as the level 300 decreases.

As described herein, in at least one example, the system 100 includes the container 104 configured to retain one or more liquids 102. The liquid level sensor 114 is disposed within the container 104. The liquid level sensor 114 is configured to transmit and receive light including the first light component 312 and the second light component 316 into the container 104 retaining the one or more liquid 102. The control unit 116 is in communication with the liquid level sensor 114. The control unit 116 is configured to determine a level of the of one or more liquids 102 within the container 104 based on a comparison of the first light component 312 in relation to the second light component 316.

In at least one example, the liquid level sensor 114 includes the first optical fiber 302. The first light component 312 and the second light component 316 are transmitted into the first optical fiber 302, and pass through the first optical fiber 302 into the internal chamber 112 of the container 104. The liquid level sensor 114 also includes the second optical fiber 304. The first light component 312 and the second light component 316 within the internal chamber 112 are received by the second optical fiber 304.

Figure 3 illustrates a graph of wavelength to signal level for the liquid at the relatively high level. As shown, the peak 310 of the wavelength of the first light component 312 is substantially less than the peak 314 of the wavelength of the second light component 316. As the peak 310 extends further toward a level of the peak 314, the control unit 116 determines that the level of the liquid 102 within the container 104 decreases.

Figure 4 illustrates the liquid level sensor 114 within the container 104 retaining the liquid 102 at a relatively low level 300, according to an example of the present disclosure. Figure 5 illustrates a graph of wavelength to signal level for the liquid 102 at the relatively low level. Referring to Figures 1-5, as the level 300 of the liquid 102 within the container 104 decreases, the peak 310 extends further toward a level of the peak 314. As such, the ratio of the peak 310 to the peak 314 increases as the level 300 of the liquid 102 within the container 104 decreases, due to less of the first light component 312 being absorbed by the liquid 102.

In at least one other example, the control unit 116 analyzes the ratio of the peak 314 to the peak 310 to determine a level of the liquid 102 within the container 104. Because the second light component 316 can be selected such that it is not absorbed by the liquid 102, the peak 314 remains constant (or substantially constant, such as within +/- 5%) between an empty container and a full container. As such, the ratio of the peak 314 to the peak 310 increases as the level of liquid 102 within the container 104 increases.

As described herein, in at least one example, the control unit 116 determines a level of the liquid 102 within the container 104 based on an amplitude (such as the peak 310) of a wavelength of the first light component 312, which is a light that is absorbed by the liquid 102 (such as red light). For example, the control unit 116 compares the peak 310 in relation to the peak 314 of the wavelength of the second light component 316, which is a light that is not absorbed by the liquid 102 (such as blue light). The control unit 116 determines the level of the liquid from the ratio of the peak 310 to the peak 314, or vice versa.

In at least one example, the control unit 116 determines the spectral difference between an absorption of the first light component 312 in relation to the second light component 316. In particular, the ratio between the first peak 310 and the second peak 314 cancels out common-mode effects to provide accurate self-referencing and calibration.

As described herein, examples of the present disclosure provide a system and a method for detecting a quantity of the liquid 102, such as fuel, within the container 104. In at least one example, the control unit 116 determines a spectral difference between different wavelengths of light (such as the first light component 312 and the second light component 316) to measure specific characteristics of fuel without electrical energy. In at least one example, the liquid level sensor 114 includes a first optical fiber 302, into which the first light component 312 (for example, a transmitting fiber) and the second light component 316 are emitted. The light including the first light component 312 and the second light component 316 pass into the first optical fiber 302, into the liquid 102, and is then received by the second optical fiber 304 (for example, a receiving fiber). The control unit 116 receives the light from the second optical fiber 304, and determines a level of the liquid 102 within the container 104 based on a comparison of the first light component 312 in relation to the second light component 316 (such as a ratio therebetween).

Figure 6 illustrates a liquid level sensor 114 within a container 104 retaining liquid 102, according to an example of the present disclosure. In this example, the liquid level sensor 114 includes a light emitter 400 that emits light including the first light component 312 and the second light component 316 into the liquid 102 and toward a light detector 402, which receives the light. The light emitter 400 and the light detector 402 are in communication with the control unit 116 (shown in Figure 1), such as through one or more wired or wireless connections. In this example, a separate light source (such as the light source 117) may not be used.

The light emitter 400 can be within the internal chamber 112, such as above the liquid 102, while the light detector 402 can be within the internal chamber 112, such as secured to the base of the container 104. By positioning the light emitter 400 above the liquid 102 (even at a full level), and the light detector 402 at the base, the liquid level sensor 114 ensures that light passes into and through the liquid 102 at all levels of the liquid 102 within the container 104. Optionally, the light emitter 400 and the light detector 402 can be at various other locations within the internal chamber 112, such as at sides thereof.

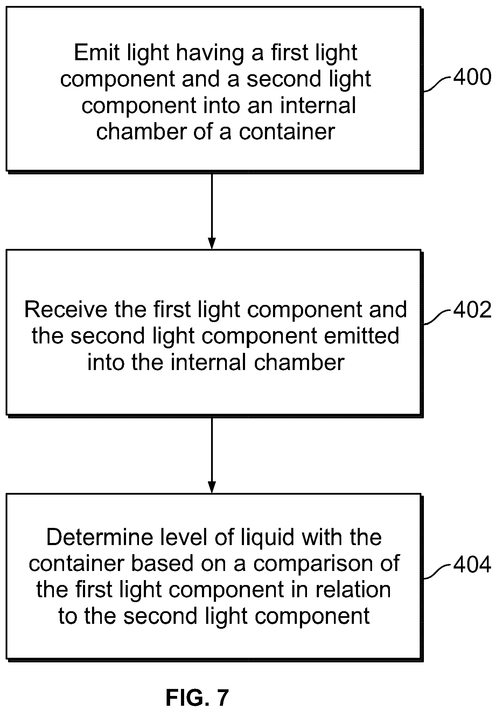

Figure 7 illustrates a flow chart of a method for sensing a level of a liquid within a container, according to an example of the present disclosure. Referring to Figures 1-7, at 400, the control unit 116 operates a light source (such as the light source 117 or the light emitter 400) to emit light having the first light component 312 and the second light component 316 into the internal chamber 112 of the container 104. The light can be emitted as a single light, such as white light, having the first light component 312 and the second light component 316. Optionally, the first light component 312 and the second light component 316 can be emitted separately.

At 402, the first light component 312 and the second light component 316, as emitted into the container 104, are received, such as by the control unit 116. At 404, the control unit 116 determines the level of the liquid 102 within the container 104 based on a comparison of the first light component 312 in relation to the second light component 316. For example, the control unit 116 determines the level of the liquid 102 based on a ratio of the peak 310 of the first light component 312 to the peak 314 of the second light component 316, or vice versa.

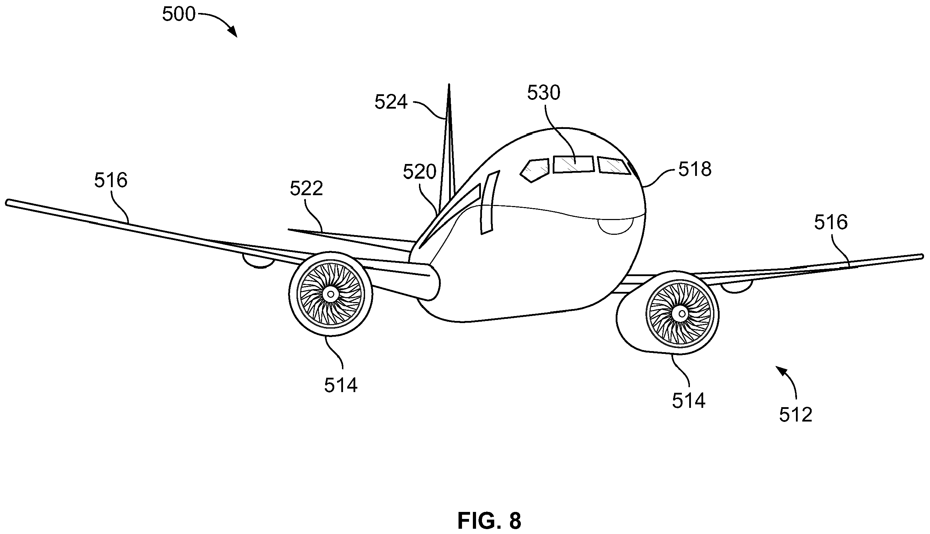

Figure 8 illustrates a perspective front view of an aircraft 500, according to an example of the present disclosure. The aircraft 500 includes a propulsion system 512 that includes engines 514, for example. Optionally, the propulsion system 512 may include more engines 514 than shown. The engines 514 are carried by wings 516 of the aircraft 500. In other examples, the engines 514 may be carried by a fuselage 518 and/or an empennage 520. The empennage 520 may also support horizontal stabilizers 522 and a vertical stabilizer 524. The fuselage 518 of the aircraft 500 defines an internal cabin 530, which includes a flight deck or cockpit, one or more work sections (for example, galleys, personnel carry-on baggage areas, and the like), one or more passenger sections (for example, first class, business class, and coach sections), one or more lavatories, and/or the like. Referring to Figures 1-8, the aircraft 500 includes one or more containers that retain a liquid. For example, the aircraft 500 includes a fuel tank that retains liquid fuel, such as jet fuel. Examples of the present disclosure are used to detect the level(s) of liquid(s) within the container(s), such as the level of jet fuel within the fuel tank.

Figure 8 shows an example of an aircraft 500. It is to be understood that the aircraft 500 can be sized, shaped, and configured differently than shown in Figure 8. Optionally, examples of the present disclosure can be used with various other vehicles. For example, instead of an aircraft, the vehicle can be a land-based vehicle, such as an automobile, a bus, a train car, or the like. As another example, the vehicle can be a watercraft. As another example, the vehicle can be a spacecraft. Optionally, examples of the present disclosure can be used with fixed structures, such as residential or commercial buildings.

The systems and methods described herein allow for the measurement of specific fuel characteristics via light energy, and remove electrical power and conductive material from a fuel tank, thereby removing sources of ignition from a flammable area. In at least one example, multiple wavelengths of light are transmitted down a transmitting optical fiber (that is, the first optical fiber 302), passed through fuel via a scattering medium within the transmitting optical fiber, and received through a receiving optical fiber (that is, the second optical fiber 304). As the wavelengths of light pass through fuel, they are affected by the presence of fuel in different ways, as some are more sensitive to absorption by CH bonds or are more readily disrupted by additives. As such, the control unit 116 can determine characteristics (height, hydrocarbon concentration, density, etc.) of the fuel based on the quality and characteristics of the light absorbed by the receiving optical fiber.

The systems and methods described herein utilize light energy to directly measure a level of liquid (such as jet fuel), rather than electrical energy, and allows for the measurement of the presence of hydrocarbon bonds within the jet fuel. In at least one example, the systems and methods described herein utilize light to measure hydrocarbon density within jet fuel via CH bond absorption.

Further, the disclosure comprises examples according to the following clauses:
Clause 1. A system comprising:
   a container configured to retain one or more liquids;
   a liquid level sensor disposed within the container, wherein the liquid level sensor is configured to transmit and receive light including a first light component and a second light component into the container retaining the one or more liquid; and
   a control unit in communication with the liquid level sensor, wherein the control unit is configured to determine a level of the one or more liquids within the container based on a comparison of the first light component in relation to the second light component.
Clause 2. The system of Clause 1, wherein the liquid level sensor comprises:
   a first optical fiber, wherein the first light component and the second light component are configured to be transmitted into the first optical fiber, and pass through the first optical fiber into an internal chamber of the container; and
   a second optical fiber, wherein the first light component and the second light component within the internal chamber are configured to be received by the second optical fiber.
Clause 3. The system of Clause 2, wherein the first optical fiber is parallel to the second optical fiber.
Clause 4. The system of Clauses 2 or 3, wherein the first optical fiber and the second optical fiber extend along a height of the container.
Clause 5. The system of any of Clauses 1-4, wherein the first light component comprises red light, and wherein the second light component comprises blue light.
Clause 6. The system of any of Clauses 1-5, wherein the control unit is configured to compare the first light component in relation to the second light component by comparing a first peak of a first wavelength of the first light component in relation to second peak of a second wavelength of the second light component.
Clause 7. The system of Clause 6, wherein the control unit is configured to determine the level of the one or more liquids based on a ratio of the first peak to the second peak, or vice versa.
Clause 8. The system of any of Clauses 1-7, wherein the liquid level sensor comprises:
   a light emitter configured to emit the first light component and the second component; and
   a light detector configured to receive the first light component and the second light component.
Clause 9. The system of any of Clauses 1-8, wherein the container is a fuel tank of a vehicle, and the liquid is liquid fuel.
Clause 10. A method comprising:
   retaining one or more liquids within a container;
   disposing a liquid level sensor within the container;
   transmitting and receiving, by the liquid level sensor, light including a first light component and a second light component into the container retaining the one or more liquid;
   comparing, by a control unit in communication with the liquid level sensor, the first light component in relation to the second light component; and
   determining, by the control unit in communication, a level of the one or more liquids within the container based on said comparing.
Clause 11. The method of Clause 10, wherein the liquid level sensor comprises:
   a first optical fiber, wherein the first light component and the second light component are transmitted into the first optical fiber, and pass through the first optical fiber into an internal chamber of the container; and
   a second optical fiber, wherein the first light component and the second light component within the internal chamber are received by the second optical fiber.
Clause 12. The method of Clause 11, wherein the first optical fiber is parallel to the second optical fiber.
Clause 13. The method of Clauses 11 or 12, wherein the first optical fiber and the second optical fiber extend along a height of the container.
Clause 14. The method of any of Clauses 10-13, wherein the first light component comprises red light, and wherein the second light component comprises blue light.
Clause 15. The method of any of Clauses 10-14, wherein said comparing comprises comparing a first peak of a first wavelength of the first light component in relation to second peak of a second wavelength of the second light component.
Clause 16. The method of Clause 15, wherein said determining is based on a ratio of the first peak to the second peak, or vice versa.
Clause 17. The method of any of Clauses 10-16, wherein the liquid level sensor comprises:
   a light emitter configured to emit the first light component and the second component; and
   a light detector configured to receive the first light component and the second light component.
Clause 18. The method of any of Clauses 10-17, wherein the container is a fuel tank of a vehicle, and the liquid is liquid fuel.
Clause 19. A vehicle comprising:
   a fuel tank configured to retain liquid fuel;
   a liquid level sensor disposed within the container, wherein the liquid level sensor is configured to transmit and receive light including a first light component and a second light component into the fuel tank retaining the liquid fuel, wherein the first light component comprises red light, wherein the second light component comprises blue light, and wherein the liquid level sensor comprises:
      a first optical fiber, wherein the first light component and the second light component are configured to be transmitted into the first optical fiber, and pass through the first optical fiber into the fuel tank; and
      a second optical fiber, wherein the first light component and the second light component within the fuel tank are configured to be received by the second optical fiber; and
      a control unit in communication with the liquid level sensor, wherein the control unit is configured to determine a level of the liquid fuel within the fuel tank based on a comparison of the first light component in relation to the second light component.
Clause 20. The vehicle of Clause 19, wherein the control unit is configured to:
   compare the first light component in relation to the second light component by comparing a first peak of a first wavelength of the first light component in relation to second peak of a second wavelength of the second light component, and
   determine the level of the liquid fuel based on a ratio of the first peak to the second peak, or vice versa.

As described herein, examples of the present disclosure systems and methods for effectively, efficiently, and safely sensing a level of liquid within a container, such as a fuel tank of a vehicle.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A system (100) comprising:
a container (104) configured to retain one or more liquids (102);
a liquid (102) level sensor (114) disposed within the container (104), wherein the liquid level sensor (114) is configured to transmit and receive light including a first light component and a second light component into the container (104) retaining the one or more liquid (102); and
a control unit (116) in communication with the liquid (102) level sensor (114), wherein the control unit (116) is configured to determine a level of the one or more liquids (102) within the container (104) based on a comparison of the first light component in relation to the second light component.

2. The system (100) of claim 1, wherein the liquid level sensor (114) comprises:
a first optical fiber, wherein the first light component and the second light component are configured to be transmitted into the first optical fiber, and pass through the first optical fiber into an internal chamber (112) of the container (104); and
a second optical fiber, wherein the first light component and the second light component within the internal chamber (112) are configured to be received by the second optical fiber.

3. The system (100) of claim 2, wherein the first optical fiber is parallel to the second optical fiber.

4. The system (100) of claim 2, wherein the first optical fiber and the second optical fiber extend along a height of the container (104).

5. The system (100) of any preceding claim, wherein the first light component comprises red light, and wherein the second light component comprises blue light.

6. The system (100) of any preceding claim, wherein the control unit (116) is configured to compare the first light component in relation to the second light component by comparing a first peak of a first wavelength of the first light component in relation to second peak of a second wavelength of the second light component; and optionally
wherein the control unit (116) is configured to determine the level of the one or more liquids (102) based on a ratio of the first peak to the second peak, or vice versa.

7. The system (100) of any preceding claim, wherein the liquid level sensor (114) comprises:
a light emitter configured to emit the first light component and the second component; and
a light detector configured to receive the first light component and the second light component.

8. A method comprising:
retaining one or more liquids (102) within a container (104);
disposing a liquid level sensor (114) within the container (104);
transmitting and receiving, by the liquid level sensor (114), light including a first light component and a second light component into the container (104) retaining the one or more liquid (102);
comparing, by a control unit (116) in communication with the liquid level sensor (114), the first light component in relation to the second light component; and
determining, by the control unit (116) in communication, a level of the one or more liquids (102) within the container (104) based on said comparing.

9. The method of claim 8, wherein the liquid level sensor (114) comprises:
a first optical fiber, wherein the first light component and the second light component are transmitted into the first optical fiber, and pass through the first optical fiber into an internal chamber (112) of the container (104); and
a second optical fiber, wherein the first light component and the second light component within the internal chamber (112) are received by the second optical fiber.

10. The method of claim 9, wherein the first optical fiber is parallel to the second optical fiber.

11. The method of claim 9, wherein the first optical fiber and the second optical fiber extend along a height of the container (104).

12. The method of any of claims 8 to 11, wherein the first light component comprises red light, and wherein the second light component comprises blue light.

13. The method of any of claims 8 to 12, wherein said comparing comprises comparing a first peak of a first wavelength of the first light component in relation to second peak of a second wavelength of the second light component; and optionally
wherein said determining is based on a ratio of the first peak to the second peak, or vice versa.

14. The method of any of claims 8 to 13, wherein the liquid level sensor (114) comprises:
a light emitter configured to emit the first light component and the second component; and
a light detector configured to receive the first light component and the second light component.

15. The system of any of claims 1 to 7, or the method of any of claims 8 to 14, wherein the container (104) is a fuel tank of a vehicle, and the liquid (102) is liquid fuel.
